# EUROPÄISCHE PATENTSCHRIFT

(11) **EP 3 013 543 B1**
(45) Veröffentlichungstag und Bekanntmachung des Hinweises auf die Patenterteilung: **09.08.2017**
(21) Anmeldenummer: 13732138.6
(22) Anmeldetag: 26.06.2013
(51) Int. Cl.: B28B 1/093, B28B 11/00, B28B 19/00, B32B 13/08, B32B 13/14

(54) **GIPSPLATTENHERSTELLUNGSANLAGE UND VERFAHREN ZUR HERSTELLUNG EINER GIPSPLATTE**
GYPSUM PLASTERBOARD PRODUCTION PLANT AND METHOD FOR PRODUCING A GYPSUM PLASTERBOARD
INSTALLATION DE FABRICATION DE PLAQUES DE PLÂTRE ET PROCÉDÉ DE FABRICATION D'UNE PLAQUE DE PLÂTRE

(43) Veröffentlichungstag der Anmeldung: 04.05.2016
(73) Patentinhaber: Knauf Gips KG, 97346 Iphofen (DE)
(72) Erfinder: KNAUF, Carlo, 97215 Weigenheim (DE); KARAKOUSSIS, Stergios, 35321 Laubach (DE); HARTMANN, Alexander, 97355 Kleinlangheim (DE)
(74) Vertreter: Meissner Bolte Partnerschaft mbB
(86) Internationale Anmeldenummer: PCT/EP2013/063349
(87) Internationale Veröffentlichungsnummer: WO 2014/206452

(56) Entgegenhaltungen:
- WO-A2-2006/097520
- DE-U1-202005 003 141
- FR-A1- 2 457 754
- GB-A- 2 119 703

## Beschreibung

Die Erfindung betrifft eine Gipsplattenherstellungsanlage nach Anspruch 1 sowie ein Verfahren zur Herstellung einer Gipsplatte nach Anspruch 14.

Aus der DE 20 2005 003 141 U1 ist es bereits bekannt, im Rahmen der Herstellung einer Gipskartonplatte wenigstens eine der Seiten der Gipskartonplatte mit Ultraschall zu beaufschlagen. Dadurch soll durch die Aktivierung von Fibrillen eine Oberflächenvergrößerung von Papier erfolgen, die eine bessere Haftung zwischen einem Gipskern und dem Papier bewirkt. Weiterhin wird durch ein stärkeres und tieferes Eindringen des Gipses in den Karton eine verbesserte Verbindung zwischen Gipskern und Papier gewährleistet. Die nur rudimentären Angaben bezüglich der Beaufschlagung des Ultraschalls werden als vergleichsweise aufwendig und kompliziert empfunden.

Aus der FR 2 457 754 sind bereits eine Gipsplattenherstellungsanlage gemäß dem Oberbegriff des Anspruchs 1 und ein Verfahren zum Herstellen einer Gipsplatte gemäß dem Oberbegriff des Anspruchs 14 umfassend mindestens eine umlaufende Förderbandvorrichtung zur Aufnahme einer aus einer oberseitigen Ummantelung sowie einer unterseitigen Ummantelung und einem dazwischen angeordneten ein- oder mehrlagigen Gipskern gebildeten Gipslage und zum Formen und Erhärten der Gipslage bekannt. Dabei ist auch dort eine Förderbandvorrichtung mit einem Tragband zur Abstützung einer Unterseite der Gipslage vorgesehen. Weiterhin wird der Einsatz einer Ultraschallbeaufschlagungseinrichtung in allgemeiner Form angesprochen.

Der Erfindung liegt die Aufgabe zugrunde, eine Gipsplattenherstellungsanlage sowie ein Verfahren zur Herstellung einer Gipskartonplatte vorzuschlagen, wobei der Aufwand für die Beaufschlagung mit Ultraschall reduziert sein soll. Diese Aufgabe wird durch eine Gipsplattenherstellungsanlage nach Anspruch 1 sowie ein Verfahren zur Herstellung einer Gipskartonplatte nach Anspruch 14 gelöst.

Die Aufgabe wird insbesondere durch eine Gipsplattenherstellungsanlage gelöst, umfassend mindestens eine umlaufende Förderbandvorrichtung zur Aufnahme einer aus einer oberseitigen Ummantelung sowie einer unterseitigen Ummantelung und einem dazwischen angeordneten ein- oder mehrlagigen Gipskern, gebildeten Gipslage und zum Formen und Erhärten der Gipslage, wobei die Förderbandvorrichtung ein Tragband zur Abstützung der Unterseite der Gipslage aufweist und wobei im Bereich der Förderbandvorrichtung eine Ultraschallbeaufschlagungseinrichtung mit ein oder mehreren Ultraschallgebern angeordnet ist, wobei wenigstens ein unterseitiger Ultraschallgeber zwischen dem Tragband und der Unterseite der Gipslage angeordnet ist. Vorzugsweise ist das Tragband im Bereich dieses Ultraschallgebers über eine Umlenkeinrichtung geführt.

Die Begriffe "Unterseite" bzw. "Oberseite" beziehen sich auf die Anordnung der jeweiligen Seite bezüglich des Förderbandes. Die Unterseite soll in Richtung des Förderbandes weisen. Die Oberseite soll der dem Förderband abgewandten Seite entsprechen. Die Oberseite kann (im Gebrauch der hergestellten Gipsplatte) einer Rückseite entsprechen. Die Unterseite kann einer Sichtseite (im Gebrauch) entsprechen.

Ein Kerngedanke der Erfindung liegt darin, dass mindestens ein unterseitiger Ultraschallgeber vorgesehen ist, der der Unterseite der Gipslage gegenüberliegt, also auf derjenigen Seite angeordnet ist, auf der auch das Tragband angeordnet ist. Durch diese Maßnahme kann ohne Unterbrechung des Verfahrens eine Ultraschallbeaufschlagung auch auf der Seite des Tragbandes, also der Unterseite, erfolgen. Dadurch kann besonders einfach und effektiv Ultraschall zugeführt und in die Gipslage eingekoppelt werden; gleichzeitig wird ein starker Verbund zwischen dem Gipskern und der ober- bzw. unterseitigen Ummantelung gewährleistet.

Die ober- und/oder unterseitige Ummantelung kann (mindestens eine) Kartonschicht und/oder ein Faservlies sein. Die Ultraschallwellen können bis an die Obergrenze der Verbundfläche eindringen und dafür sorgen, dass die Verbindung zwischen dem Gipskern (bzw. einem Gipsbrei) und dem Verbundmaterial (z.B. Karton und/oder Faservlies) vergleichsweise schnell hergestellt werden kann, so dass eine zufriedenstellende Haftung vor einem Schneidevorgang der einzelnen Gipsplatten gewährleistet ist.

Vorzugsweise ist zusätzlich zu dem mindestens einen unterseitigen Ultraschallgeber ein oberseitiger Ultraschallgeber vorgesehen. Durch eine derartige Maßnahme kann besonders effektiv von zwei Seiten (ohne Unterbrechung des Verfahrens) Ultraschall zugeführt werden.

In einer konkreten Ausführungsform ist mindestens eine unter- und/oder oberseitige Glätteinrichtung, insbesondere ein unter- und/oder oberseitiger Glättbalken, vorgesehen, die (bzw. der) mindestens einen Ultraschallgeber umfasst. Insbesondere können Ultraschallgeber und Glätteinrichtung ein gemeinsames Modul ausbilden, das sowohl vorgesehen ist, die Gipslage zu glätten als auch die Gipslage mit Ultraschall zu beaufschlagen. Dadurch wird die Konstruktion der Gipsplattenherstellungsanlage weiter vereinfacht. In synergistischer Weise wird genau dort Ultraschall zugeführt, wo auch geglättet wird, was zu einem besonders starken und zuverlässigen Verbund führt.

In verschiedenen Ausführungsformen kann mindestens eine Höhenverstelleinrichtung vorgesehen sein, um die Höhe wenigstens eines ober- und/oder mindestens eines unterseitigen Ultraschallgebers und/oder mindestens einer Glätteinrichtung zu verstellen. Besonders bevorzugt ist eine Höhenverstelleinrichtung für die Verstellung der Höhe eines oberseitigen Ultraschallgebers und/oder einer oberseitigen Glätteinrichtung. Dadurch wird ein schnell durchführbares Verfahren ermöglicht. Weiterhin können Schäden an der Gipsbauplatte vermieden werden. Insbesondere während einer Anfahrphase können Risse in der Ummantelung vermieden werden. Dennoch kann eine zuverlässige Ultraschallbeaufschlagung bzw. Glättung durchgeführt werden, dadurch dass die oberseitige Glätteinrichtung und/oder der oberseitige Ultraschallgeber an die Gipslage herangeführt werden kann. Mindestens eine untere Glätteinrichtung und/oder mindestens ein unterer Ultraschallgeber kann ggf. bei einer bestimmten Position fixiert sein (also unbeweglich ausgebildet sein). In einer Ausführungsform kann jedoch die Höhe des unterseitigen Ultraschallbalkens (nach-)justiert werden, um die Einsatzhöhe des unterseitigen Ultraschallgebers (gegenüber der Gipslage) auf 0 zu reduzieren. Dadurch wird gewährleistet, dass der Gipsstrang auf dem unteren Ultraschallgeber bzw. der mindestens einen unteren Glätteinrichtung aufliegt, so dass kein Luftpolster zwischen Gipslage und unterer Glätteinrichtung bzw. unterem Ultraschallgeber entstehen kann. Dadurch wird das Herstellungsverfahren weiter verbessert. Seiten- und Höhenverstelleinrichtung können in einer Einheit vereinigt sein. Vorzugsweise sind auch schräge Bewegungen bzw. eine gleichzeitige Höhen- und Seitenbewegung möglich.

Zusätzlich oder alternativ kann mindestens eine Seitenverstelleinrichtung vorgesehen sein, um die laterale Position mindestens eines ober- und/oder mindestens eines unterseitigen Ultraschallgebers und/oder mindestens einer Glätteinrichtung zu verstellen. Besonders bevorzugt ist es, wenn mindestens eine oberseitige Glätteinrichtung und/oder mindestens ein oberseitiger Ultraschallgeber über mindestens eine Seitenverstelleinrichtung lateral beweglich ist (bzw. seitlich verstellbar ist). Auch dadurch können verschiedenen Phasen (beispielsweise die Anfahrphase und die Phase während des eigentlichen Betriebs) durch Verstellung der oberseitigen Glätteinrichtung bzw. des mindestens einen oberseitigen Ultraschallgebers, berücksichtigt werden, was das Verfahren weiter verbessert.

Die Gipsplattenherstellungsanlage kann derart ausgebildet sein, dass die Gipslage (im Betrieb) auf der unterseitigen Glätteinrichtung und/oder auf dem unterseitigen Ultraschallgeber aufliegt. Dadurch wird eine besonders effektive Einkopplung des Ultraschalls bzw. eine besonders effektive Glättung gewährleistet.

In konkreten Ausführungsformen kann mindestens ein Ultraschallgeber ausgeführt sein, um (vorzugsweise steuer- und/oder regelbar) eine Frequenz von 10 kHz bis 100 kHz, weiter vorzugsweise 25 kHz bis 40 kHz, auszusenden. Der oder die Ultraschallgeber können nach diesem bevorzugten Aspekt insbesondere auch mit einem festen Wert der Frequenz innerhalb der angegebenen Vorzugsbereiche arbeiten. Sofern eine Steuer- und/oder Regelbarkeit gegeben sein kann, kann die Einstellbarkeit über die gesamte Breite der angegebenen Vorzugsbereiche oder aber auch über andere Bereiche, speziell auch über Teilbereiche der angegebenen Vorzugsbereiche gegeben sein.

In einer speziellen Ausführungsform kann vorgesehen sein, dass mindestens ein Ultraschallgeber ausgebildet ist, um vorzugsweise steuer- und/oder regelbar eine Amplitude von 5 µm bis 500 µm, vorzugsweise 10 µm bis 100 µm, auszusenden. Auch hier gilt, dass der oder die Ultraschallgeber nach diesem bevorzugten Aspekt insbesondere auch mit einem festen Wert der Amplitude arbeiten können. Sofern eine Steuer- und/oder Regelbarkeit gegeben ist, kann die Einstellbarkeit über die gesamte Breite der angegebenen Vorzugsbereiche oder aber auch über andere Bereiche, speziell über Teilbereiche der angegebenen Vorzugsbereiche gegeben sein.

In einer weiter bevorzugten Ausgestaltung ist der mindestens eine Ultraschallgeber ausgebildet, um vorzugsweise steuer- und/oder regelbar eine Leistung von mindestens 700 W abzugeben.

Vorzugsweise kann die übertragene Leistung der Ultraschallgeber, die als Ultraschall-Glättschienen ausgebildet sein können, durch Einsprühen von Aerosoltröpfchen (Nebeltröpfchen) auf die einzuwirkende Fläche (also die einem Gipskern abgewandte Karton- oder Faservliesflächen) erhöht werden. Ist z.B. die eingesetzte Leistung des Ultraschall-Gebers auf maximal 1500 W eingestellt, so erreicht die in der Gipsgrenzschicht eingetragene Leistung einen Wert von 700 W. Die Differenz ergibt sich aus Übertragungsverlusten in Form von Wärme und/oder aufgrund des dünnen Luftpolsters zwischen Ummantelung und Ultraschall-Geber. Durch den mit dem Aerosolnebel erzielten dünnen Wasserfilm werden diese Verluste verringert. Der tatsächliche Leistungseintrag in die Grenzschicht wird erhöht.

In einer weiter bevorzugten Ausgestaltung wirkt einer der Ultraschallgeber, bei Vorhandensein mehrerer Ultraschallgeber, vorzugsweise alle Ultraschallgeber mit einer Kühleinrichtung zusammen, die dazu ausgebildet ist, den oder die Ultraschallgeber durch einen geführten Kühlluftstrom zu kühlen. Eine derartige Zwangskühlung kann permanent oder nur bedarfsweise betrieben werden. Der geführte Kühlluftstrom kann durch einen oder mehrere Ventilatoren oder konvektiv angetrieben werden.

In einer bevorzugten Weiterbildung ist die Leistung der Kühleinrichtung steuer- und/oder regelbar, insbesondere in Abhängigkeit der Temperatur des oder der Ultraschallgeber.

In einer konkreten Ausführungsform kann mindestens ein oberseitiger Ultraschallgeber mindestens einem unterseitigen Ultraschallgeber gegenüberliegen. Alternativ oder zusätzlich kann mindestens ein oberseitiger Ultraschallgeber (in Laufrichtung) vor mindestens einem unterseitigen Ultraschallgeber liegen. Weiter alternativ oder zusätzlich kann mindestens ein oberseitiger Ultraschallgeber (in Laufrichtung) hinter mindestens einem unterseitigen Ultraschallgeber liegen. Unter der Angabe, dass der oberseitige Ultraschallgeber "vor" dem unterseitigen Ultraschallgeber liegt, soll verstanden werden, dass im Betrieb der Anlage ein bestimmter Punkt der Gipslage zuerst den oberseitigen Ultraschallgeber passiert und danach den unterseitigen Ultraschallgeber. Umgekehrt soll die Angabe "hinter" dem unterseitigen Ultraschallgeber bedeuten, dass der oberseitige Ultraschallgeber im Betrieb der Anlage erst dann einen bestimmten Punkt der Gipslage mit Ultraschall beaufschlagt, wenn dieser Punkt bereits den unteren Ultraschallgeber passiert hat. In einer konkreten Ausführungsform können drei oberseitige Ultraschallgeber und ein unterseitiger Ultraschallgeber vorgesehen sein, wobei vorzugsweise ein oberseitiger Ultraschallgeber vor und/oder ein oberseitiger Ultraschallgeber gegenüber und/oder ein oberseitiger Ultraschallgeber hinter dem unterseitigen Ultraschallgeber angeordnet ist. Dadurch kann ein besonders starker Verbund bereitgestellt werden.

Die erfindungsgemäße Anordnung bzw. die erfindungsgemäße Gipsplattenherstellungsanlage ist dafür gedacht, unterschiedliche Produktionsverfahren abzudecken. Die Verfahrensweisen können sich in folgender Weise unterscheiden:
I. Für einheitliche Gipsplatten mit einem einheitlichen Gipskern (randseitige Ummantelung und einheitlicher Gipskern) werden nur gegenüberliegende Ultraschall-Geber, insbesondere in Form von Ultraschall-Glättschienen benutzt.
II. Für Gipsplatten mit einem mehrschichtigen Gipskern wird je nach Einstellung der Bindezeit der einzelnen Schichten des Gipskerns die Positionierung der Ultraschall-Geber festgelegt, z.B.
   a) ist die zweite Schicht, die der Rückseite der Gipsplatte zugeordnet ist, in ihrem Abbindeverhalten kürzer als die erste Schicht, die die zentrale Schicht des Gipskerns bildet, eingestellt, so wird der obere Ultraschall-Geber (die obere Ultraschall-Glättschiene) vor (in Transportrichtung der Gipslage) des unteren Ultraschall-Gebers (Ultraschall-Glättschiene) positioniert.
   b) ist die der Rückseite zugewandte zweite Schicht in ihrem Abbindeverhalten länger eingestellt als die Abbindezeit der im Gipskern zentralen ersten Schicht, so wird der obere Ultraschall-Geber (die obere Ultraschall-Glättschiene) in Transportrichtung der Gipslage hinter dem unteren Ultraschall-Geber (der unteren Ultraschall-Glättschiene) positioniert.
   c) verhalten sich der oder die zweiten Schichten identisch wie die erste Schicht, welche die zentrale Schicht im Gipskern bildet, so werden beide Ultraschall-Geber (beide Ultraschall-Glättschienen) oben und unten gegenüberliegend positioniert.

In einer bevorzugten Ausgestaltung ist vorgesehen, dass der oder die Ultraschallgeber an einer derartigen Position relativ zur Förderbandvorrichtung angeordnet sind, dass die Ultraschalleinwirkung vorzugsweise 2 bis 8 s, weiter vorzugsweise etwa 4 bis 5 s vor Versteifungsbeginn des Gipses gegeben ist und/oder die Breite des oder der Ultraschallgeber so bemessen ist, dass unter Berücksichtigung der Transportgeschwindigkeit der Förderbandvorrichtung die Einwirkzeit (bzw. die Verweilzeit der bestrahlten Fläche) am jeweiligen Ultraschallgeber mindestens 0,4 s beträgt.

Die oben genannte Aufgabe wird unabhängig gelöst durch ein Verfahren zum Herstellen einer Bauplatte, insbesondere Gipskartonplatte und/oder faservliesummantelten Gipsplatte, insbesondere der vorbeschriebenen Art, umfassend die Schritte:
- Bereitstellen einer Förderbandeinrichtung mit einem Tragband
- Aufbringen einer aus einer oberseitigen Ummantelung sowie einer unterseitigen Ummantelung und einem dazwischen angeordneten ein- oder mehrlagigen Gipskern gebildeten Gipslage auf das Tragband
- Umlenken des Tragbands derart, dass in einer Position des Tragbands ein Zwischenraum zur Unterseite der Gipslage gebildet wird
- Aussenden von Ultraschall innerhalb des Zwischenraums in Richtung der Unterseite der Gipslage

Der Gipskern kann aus einer Schicht bestehen, so dass die chemischen und/oder physikalischen Eigenschaften des Gipskerns über die gesamte Schichtdicke im Wesentlichen gleich sind. Der Gipskern kann aber auch mindestens zwei Schichten umfassen. Vorzugsweise unterscheiden sich die zwei Schichten durch mindestens eine chemische und/oder physikalische Eigenschaft, insbesondere ihre Dichte. Weiter vorzugsweise kann eine erste, insbesondere aufgeschäumte, Schicht (Kernschicht) eine geringere Dichte aufweisen als eine zweite, insbesondere dichte (nicht-aufgeschäumte), Schicht, die zwischen der ersten Schicht und der ober- und/oder unterseitigen Ummantelung angeordnet ist. In einer konkreten Ausführungsform umfasst die Gipsplatte fünf Schichten, nämlich eine erste Schicht (als Kernschicht), zwei an die erste Schicht angrenzende zweite Schichten und die zwei an die zweiten Schichten angrenzenden Ummantelungen. Sowohl die erste als auch die mindestens eine zweite Schicht des Gipskerns sind mindestens teilweise aus Gips gebildet (beispielsweise zu mindestens 10 Vol.-% oder 30 Vol.-% oder 50 Vol.-%). Die erste Schicht ist vorzugsweise mindestens doppelt so dick wie die mindestens eine zweite Schicht (vorzugsweise mindestens dreimal so dick, weiter vorzugsweise mindestens viermal so dick). In einer konkreten Ausführungsform ist die Dichte der mindestens einen zweiten Schicht mindestens 1,5-mal so groß (vorzugsweise mindestens zweimal so groß, noch weiter vorzugsweise mindestens dreimal so groß) wie die Dichte der ersten Schicht. Zusammen mit einer Ultraschallbeaufschlagung wird beim Bereitstellen eines mehrlagigen Gipskerns in synergistischer Weise eine äußerst robuste Gipsplatte erreicht. Eine besonders synergistische Wechselwirkung lässt sich erreichen, wenn der oder die Ultraschallgeber vor allem auf eine Schicht einwirken, die eine höhere Dichte aufweisen. Die Ultraschalleinkopplung wirkt besonders effizient, wenn die Gipsschicht eine besonders hohe Dichte, vorzugsweise eine 1,5-mal höhere Dichte als die Schicht geringster Dichte innerhalb einer gegebenen Gipsplatte aufweist.

Damit eignet sich die erfindungsgemäß vorgeschlagene Vorrichtung bzw. das erfindungsgemäß vorgeschlagene Verfahren auch besonders gut zur Anbindung einer unterseitigen Ummantelung und/oder einer oberseitigen Ummantelung an eine zugeordnete Randschicht, wobei die Randschicht eine gegenüber einer Kernschicht höhere Dichte aufweist, mithin also beispielsweise zur Verbesserung des Verbundes eines Sichtkartons mit einer zugeordneten Randschicht der Gipsplatte bzw. eines Rückseitenkartons mit einer zugeordneten Randschicht der Gipsplatte, sofern unterseitige Ummantelung und oberseitige Ummantelung beispielsweise als Kartonschichten ausgebildet sind.

Weitere Ausführungsformen ergeben sich aus den Unteransprüchen.

Nachfolgend wird die Erfindung auch hinsichtlich weiterer Merkmale und Vorteile anhand von Ausführungsbeispielen beschrieben, die anhand der beiliegenden Abbildungen näher erläutert werden. Hierbei zeigen:
- Fig. 1:: eine erfindungsgemäße Gipsplattenherstellungsanlage
- Fig. 2:: eine Gipslage umfassend einen mehrschichtigen Gipskern
- Fig. 3:: eine Gipslage umfassend einen einschichtigen Gipskern
- Fig. 4:: ein Diagramm, das eine bevorzugte Einwirkungszeit der Ultraschallenergie bezogen auf den Versteifungsprozess des Gipses veranschaulicht.

Die Gipsplattenherstellungsanlage umfasst eine Förderbandvorrichtung 10 mit einem Tragband 11 sowie Tragrollen 12 und eine Umlenkeinrichtung 13 (ausführungsgemäß eine Umlenkrolle 13 umfassend). Durch die Umlenkeinrichtung 13 wird zwischen einer Gipsplatte 16 und dem Tragband 11 ein Zwischenraum 14 gebildet. Innerhalb des Zwischenraums 14 ist ein unterseitiger Ultraschallgeber 15 angeordnet. Eine Unterseite 17 der Gipsplatte 16 weist dabei in Richtung des Tragebandes 11. Entsprechend weist eine Oberseite 18 der Gipsplatte 16 von dem Trageband 11 weg. Im Bereich der Umlenkrolle 13 liegt die Gipsplatte 16 (zumindest abschnittsweise) auf dem Ultraschallgeber 15 auf. In der Ausführungsform bildet der Ultraschallgeber 15 eine Baueinheit mit einer unterseitigen Glätteinrichtung 19 aus. Gegenüber der unterseitigen Baueinheit aus Ultraschallgeber 15 und Glätteinrichtung 19 befindet sich ein erster oberseitiger Ultraschallgeber 20, der eine Baueinheit mit einer ersten oberseitigen Glätteinrichtung 21 ausbildet.

Der unterseitige Ultraschallgeber 15 sowie die unterseitige Glätteinrichtung 19 bilden einen Unterbalken. Die oberseitige Glätteinrichtung 21 bildet zusammen mit dem oberseitigen Ultraschallgeber 20 einen Oberbalken. Vor dem ersten oberseitigen Ultraschallgeber 20 befindet sich ein zweiter oberseitiger Ultraschallgeber 22 sowie eine zweite oberseitige Glätteinrichtung 23. Auch hinter dem ersten Ultraschallgeber 20 befindet sich ein dritter oberseitiger Ultraschallgeber 24 sowie eine dritte obere Glätteinrichtung 25. Während des Betriebs wird die Gipsplatte gemäß der Figur von links nach rechts befördert.

Die Gipsplatte 16 umfasst einen Gipskern 26, eine oberseitige Ummantelung 27 sowie eine unterseitige Ummantelung 28. Bei den Ummantelungen 27, 28 kann es sich um mindestens eine Kartonlage und/oder mindestens eine Faservlieslage handeln. Die oberseitigen Ultraschallgeber 20, 22, 24 bzw. die oberseitigen Glätteinrichtungen 21, 23, 25 können durch Höhenverstelleinrichtungen 29 der Höhe nach verstellbar sein. Weiterhin kann eine laterale Seitenverstelleinrichtung vorgesehen sein (nicht in den schematischen Figuren zu sehen).

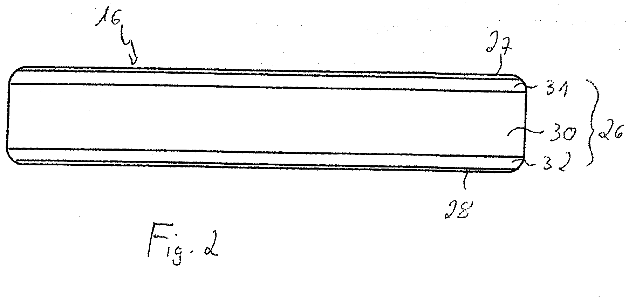

Figur 2 zeigt einen alternativen Aufbau der Gipslage 16. Figur 2 zeigt außerdem (nach dem Aushärten und Erstarren der Gipsplatte) den Aufbau einer mit der Gipsplattenherstellungsanlage hergestellten Gipsplatte.

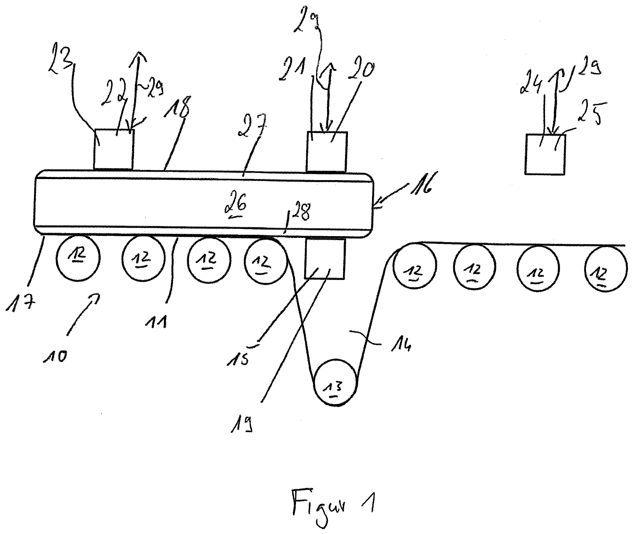

Die Gipslage 16 umfasst, wie im Ausführungsbeispiel gemäß Figur 1, einen Gipskern 26 sowie eine oberseitige Ummantelung 27 und eine unterseitige Ummantelung 28. Der Gipskern 26 umfasst im Ausführungsbeispiel gemäß Figur 2 eine erste Schicht 30 (Kernschicht) sowie zwei zweite Schichten 31, 32 (Verbindungsschichten). Die zweite Schicht 31 ist zwischen der ersten Schicht 30 und der oberseitigen Ummantelung 27 angeordnet. Die zweite Schicht 32 ist zwischen der ersten Schicht 30 und der unterseitigen Ummantelung 28 angeordnet.

Die zweiten Schichten 31, 32 dienen als Verbindungsschichten zwischen erster Schicht 30 (Kernschicht) und ober- bzw. unterseitigen Ummantelung 27, 28 und grenzen vorzugsweise unmittelbar an die erste Schicht 30 sowie die oberseitige bzw. unterseitige Ummantelung 27, 28 an.

Die erste Schicht 30 ist eine aufgeschäumte Gipsschicht. Die zweiten Schichten 31, 32 sind dichte, also nicht-aufgeschäumte oder weniger stark aufgeschäumte, Gipsschichten. In einem konkreten Ausführungsbeispiel kann es sich bei der ersten Schicht 30 um REA-Gips, sonstige technische Gipse, Naturgipse oder Alpha-Gipse handeln. Bei den zweiten Schichten 31, 32 kann es sich beispielsweise um Phosphor-Gipse (zumindest anteilig), Naturgipse oder REA-Gipse handeln. Durch einen derartigen Aufbau wird bei der erfindungsgemäßen Ultraschallbeaufschlagung ein äußerst fester Verbund erreicht, der sowohl auf dem mehrschichtigen Aufbau als auch der Ultraschallbeaufschlagung per se beruht. Die Verstärkung des Verbundes aufgrund der Ultraschallbeaufschlagung lässt sich durch die Prüfung der Haftzugfestigkeiten auch physikalisch nachweisen. Konkret wurden einschichtige Platten mit und ohne Ultraschallbeaufschlagung verglichen, wobei die untersuchten Gipsplatten Ummantelungen aus Faservlies aufwiesen. Die Haftzugswerte von Faservlies zu Gipsschicht liegen ohne Ultraschall im Bereich von 0,077 bis 0,082 N/mm². Die Haftzugwerte von Faservlies zu Gipsschicht liegen mit Ultraschallbeaufschlagung im Bereich von 0,091 bis 0,095 N/mm². Insofern wurde eine Steigerung um bis zu 20 % realisiert.

Wenn man zusätzlich mehrschichtige Gipsplatten mit einem sehr leichten Gipskern vorsieht, so lässt sich eine Gipsplatte realisieren, die ein vergleichsweise geringes Gesamtgewicht und eine dennoch hohe Stabilität aufweist. Die im Vergleich zur ersten Schicht dichteren zweiten Schichten sowie die Ultraschallbeaufschlagung bewirken in synergistischer Weise die angesprochene Stabilitätssteigerung.

Insbesondere kann insofern auch eine vergleichsweise leichte und dennoch äußerst stabile Gipsplatte realisiert werden. Dies ist darauf zurückzuführen, dass die Grenzschichten zwischen der Ummantelung (27 oder 28) sowie der jeweiligen zweiten Schicht (31 oder 32) einerseits und die Grenzschichten zwischen der zweiten Schicht (31 oder 32) und der ersten Schicht 30 andererseits durch die Ultraschallbeaufschlagung miteinander zuverlässig verbunden werden.

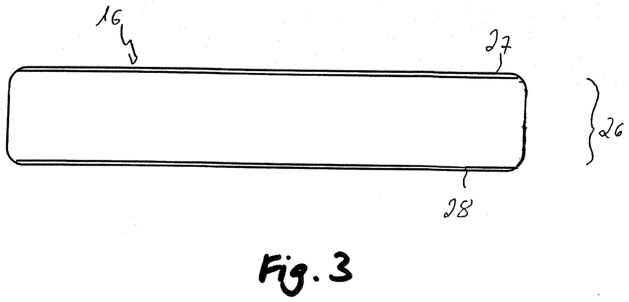

In Figur 3 ist eine Gipslage umfassend einen einlagigen Gipskern zur Verdeutlichung, dass die vorliegende Erfindung auch für einschichtige Gipsplatten von hohem Vorteil ist, dargestellt. Die einschichtige Gipsplatte umfasst dabei einen Gipskern 26 sowie Ummantelungen 27, 28.

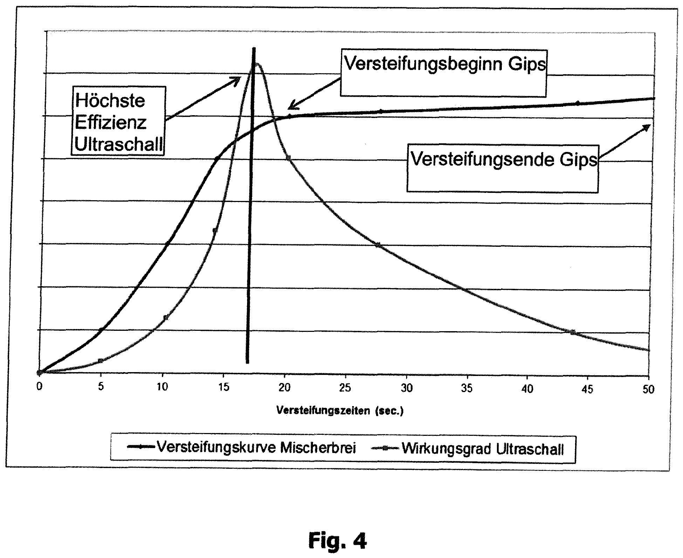

In Figur 4 ist ein Diagramm gezeigt, das den zeitlichen Verlauf der Versteifung des Gipses sowie eine als vorteilhaft gesehene Einwirkung der Ultraschallenergie vor Versteifungsbeginn des Gipses veranschaulicht. In dem Diagramm ist dargestellt, dass die Gipsschicht, bei der eine möglichst gute Anbindung der zugeordneten Ummantelung 27, 28 sichergestellt werden soll, nach etwa 20 s zu versteifen beginnt. Die (maximale) Ultraschallenergie sollte etwa 3 bis 5 s zuvor eingetragen werden, um eine möglichst hohe Effizienz zu erzielen. Die mittlere Breite (Breite bei 50 % der maximalen Leistung) des Ultraschallpulses beträgt etwa 7 s bis 10 s.

### Bezugszeichenliste

- 10: Förderbandvorrichtung
- 11: Tragband
- 12: Tragrolle
- 13: Umlenkeinrichtung (Umlenkrolle)
- 14: Zwischenraum
- 15: Unterseitiger Ultraschallgeber
- 16: Gipslage
- 17: Unterseite
- 18: Oberseite
- 19: Unterseitige Glätteinrichtung

- 20: Erster oberseitiger Ultraschallgeber
- 21: Erste oberseitige Glätteinrichtung
- 22: Zweiter oberseitiger Ultraschallgeber
- 23: Zweite oberseitige Glätteinrichtung
- 24: Dritter oberseitiger Ultraschallgeber
- 25: Dritte oberseitige Glätteinrichtung
- 26: Gipskern
- 27: Oberseitige Ummantelung
- 28: Unterseitige Ummantelung
- 29: Höhenverstelleinrichtung

- 30: Erste Schicht
- 31: Zweite Schicht
- 32: Zweite Schicht

## Patentansprüche

1. Gipsplattenherstellungsanlage, umfassend
mindestens eine umlaufende Förderbandvorrichtung (10) zur Aufnahme einer aus einer oberseitigen Ummantelung (27) sowie einer unterseitigen Ummantelung (28) und einen dazwischen angeordneten ein- oder mehrlagigen Gipskern (26), gebildeten Gipslage (16) und zum Formen und Erhärten der Gipslage (16),
wobei die Förderbandvorrichtung (10) ein Tragband (11) zur Abstützung einer Unterseite (17) der Gipslage (16) aufweist und wobei im Bereich der Förderbandvorrichtung (10) eine Ultraschallbeaufschlagungseinrichtung mit ein- oder mehreren Ultraschallgebern (15, 20, 22, 24) angeordnet ist,
**dadurch gekennzeichnet, dass**
wenigstens ein unterseitiger Ultraschallgeber zwischen dem Tragband (11) und der Unterseite (17) der Gipslage (16) angeordnet ist und das Tragband (11) im Bereich dieses Ultraschallgebers über eine Umlenkeinrichtung (13) geführt ist.

2. Gipsplattenherstellungsanlage nach Anspruch 1, **dadurch gekennzeichnet, dass** mindestens ein oberseitiger Ultraschallgeber (20, 22, 24) vorgesehen ist.

3. Gipsplattenherstellungsanlage nach einem der vorhergehenden Ansprüche, **dadurch gekennzeichnet, dass** mindestens eine unter- und/oder mindestens eine oberseitige Glätteinrichtung, insbesondere Glättbalken, vorgesehen ist, die vorzugsweise mindestens einen Ultraschallgeber (15, 20, 22, 24) umfasst.

4. Gipsplattenherstellungsanlage nach einem der vorhergehenden Ansprüche, **dadurch gekennzeichnet, dass** mindestens eine Höhenverstelleinrichtung (29) vorgesehen ist, um die Höhe mindestens eines ober- und/oder mindestens eines unterseitigen Ultraschallgeber und/oder mindestens einer Glätteinrichtung zu verstellen.

5. Gipsplattenherstellungsanlage nach einem der vorhergehenden Ansprüche, **dadurch gekennzeichnet, dass** mindestens eine Seitenverstelleinrichtung vorgesehen ist, um die laterale Position mindestens eines ober- und/oder mindestens eines unterseitigen Ultraschallgebers (15, 20, 22, 24) und/oder mindestens einer Glätteinrichtung (19, 21, 23, 25) zu verstellen.

6. Gipsplattenherstellungsanlage nach einem der vorhergehenden Ansprüche, **dadurch gekennzeichnet, dass** die Gipsplatte (16) im Betrieb auf der unterseitigen Glätteinrichtung (19) und/oder auf dem unterseitigen Ultraschallgeber (15) aufliegt.

7. Gipsplattenherstellungsanlage nach einem der vorhergehenden Ansprüche, **dadurch gekennzeichnet, dass** mindestens ein Ultraschallgeber (15, 20, 22, 24) ausgebildet ist, um vorzugsweise steuer- und/oder regelbar eine Frequenz von 10 kHz bis 100 kHz, vorzugsweise 25 kHz bis 40 kHz, auszusenden.

8. Gipsplattenherstellungsanlage nach einem der vorhergehenden Ansprüche, **dadurch gekennzeichnet, dass** mindestens ein Ultraschallgeber (15, 20, 22, 24) ausgebildet ist, um vorzugsweise steuer- und/oder regelbar eine Amplitude von 5 µm bis 500 µm, vorzugsweise 10 µm bis 100 µm auszusenden.

9. Gipsplattenherstellungsanlage nach einem der vorhergehenden Ansprüche, **dadurch gekennzeichnet, dass** mindestens ein Ultraschallgeber (15, 20, 22, 24) ausgebildet ist, um vorzugsweise steuer- und/oder regelbar eine Leistung von mindestens 700 W abzugeben.

10. Gipsplattenherstellungsanlage nach einem der vorhergehenden Ansprüche, **dadurch gekennzeichnet, dass** mindestens einer der Ultraschallgeber (15, 20, 22, 24) vorzugsweise bei Vorhandensein mehrerer Ultraschallgeber alle Ultraschallgeber mit einer Kühleinrichtung zusammenwirken, die dazu ausgebildet ist, den oder die Ultraschallgeber durch einen geführten Kühlluftstrom zu kühlen.

11. Gipsplattenherstellungsanlage nach Anspruch 10, **dadurch gekennzeichnet, dass** die abgegebene Leistung der Kühleinrichtung steuer- und/oder regelbar ist, insbesondere in Abhängigkeit der Temperatur des oder der Ultraschallgeber (15, 20, 22, 24).

12. Gipsplattenherstellungsanlage nach einem der vorhergehenden Ansprüche, **dadurch gekennzeichnet, dass** mindestens ein oberseitiger Ultraschallgeber (20, 22, 24) mindestens einem unterseitigen Ultraschallgeber (15) gegenüberliegt und/oder mindestens ein oberseitiger Ultraschallgeber (22) in Laufrichtung vor mindestens einem unterseitigen Ultraschallgeber (15) liegt und/oder
mindestens ein oberseitiger Ultraschallgeber (24) in Laufrichtung hinter mindestens einem unterseitigen Ultraschallgeber (15) liegt.

13. Gipsplattenherstellungsanlage nach einem der Ansprüche 1 bis 12, **dadurch gekennzeichnet, dass** der oder die Ultraschallgeber (15, 20, 22, 24) an einer derartigen Position relativ zur Förderbandvorrichtung (10) angeordnet sind, dass die Ultraschalleinwirkung vorzugsweise 2 bis 8 s, weiter vorzugsweise etwa 4 bis 5 s vor Versteifungsbeginn des Gipses gegeben ist und/oder die Breite des oder der Ultraschallgeber (15, 20, 22, 24) so bemessen ist, dass unter Berücksichtigung der Transportgeschwindigkeit der Förderbandvorrichtung die Einwirkzeit bzw. die Verweilzeit der bestrahlten Fläche am jeweiligen Ultraschallgeber (15, 20, 22, 24) mindestens 0,4 s beträgt.

14. Verfahren zum Herstellen einer Gipsplatte, insbesondere nach einem der vorhergehenden Ansprüche, mit den Schritten:
- Bereitstellen einer Förderbandvorrichtung (10) mit einem Tragband (11),
- Aufbringen einer aus einer oberseitigen Ummantelung (27) sowie einer unterseitigen Ummantelung (28) und einem dazwischen angeordneten ein- oder mehrlagigen Gipskern (26) gebildeten Gipslage (16) auf das Tragband (11), und **gekennzeichnet durch** die folgenden Schritte:
- Umlenken des Tragbandes (11) derart, dass an mindestens einer Position des Tragbandes (11) ein Zwischenraum (14) zur Unterseite (17) der Gipslage (16) gebildet wird,
- Aussenden von Ultraschall innerhalb des Zwischenraumes (14) in Richtung der Unterseite der Gipslage (16).

15. Verfahren nach Anspruch 14, **dadurch gekennzeichnet, dass** der mehrlagige Gipskern (26) mindestens zwei Schichten (30, 31, 32) umfasst, die sich durch mindestens eine chemische und/oder physikalische Eigenschaft, insbesondere ihre Dichte, unterscheiden,
wobei vorzugsweise ein erste, insbesondere aufgeschäumte, Schicht (30) eine geringere Dichte aufweist als mindestens eine zweite, insbesondere dichte (nicht-aufgeschäumte), Schicht (31, 32), die zwischen der ersten Schicht (30) und der ober- und/oder unterseitigen Ummantelung (27, 28) angeordnet ist.

## Claims

1. A gypsum plasterboard production plant comprising
at least one circulating conveyor belt device (10) for receiving a gypsum layer (16) formed from a top-side casing (27) and a bottom-side casing (28) and a single-layer or multilayer gypsum core (26) arranged therebetween, and for forming and hardening the gypsum layer (16),
wherein the conveyor belt device (10) has a supporting belt (11) for supporting a bottom side (17) of the gypsum layer (16), and wherein, in the area of the conveyor belt device (10), there is arranged an ultrasound application device having one or more ultrasound transmitters (15, 20, 22, 24),
**characterized in that**
at least one bottom-side ultrasound transmitter is arranged between the supporting belt (11) and the bottom side (17) of the gypsum layer (16), and the supporting belt (11) in the area of said ultrasound transmitter is guided over a deflection device (13).

2. The gypsum plasterboard production plant according to claim 1, **characterized in that** at least one top-side ultrasound transmitter (20, 22, 24) is provided.

3. The gypsum plasterboard production plant according to any one of the preceding claims, **characterized in that** at least one bottom-side and/or at least one top-side smoothing device such as a smoothing beam is provided comprising preferably at least one ultrasound transmitter (15, 20, 22, 24).

4. The gypsum plasterboard production plant according to any one of the preceding claims, **characterized in that** at least one height adjustment device (29) is provided to adjust the height of at least one top-side and/or at least one bottom-side ultrasound transmitter and/or at least one smoothing device.

5. The gypsum plasterboard production plant according to any one of the preceding claims, **characterized in that** at least one side adjustment device is provided to adjust the lateral position of at least one top-side and/or at least one bottom-side ultrasound transmitter (15, 20, 22, 24) and/or at least one smoothing device (19, 21, 23, 25).

6. The gypsum plasterboard production plant according to any one of the preceding claims, **characterized in that** the gypsum board (16) during operation rests upon the bottom-side smoothing device (19) and/or the bottom-side ultrasound transmitter (15).

7. The gypsum plasterboard production plant according to any one of the preceding claims, **characterized in that** at least one ultrasound transmitter (15, 20, 22, 24) is configured to emit a frequency from 10 kHz to 100 kHz, preferably 25 kHz to 40 kHz in a preferably controllable and/or regulatable manner.

8. The gypsum plasterboard production plant according to any one of the preceding claims, **characterized in that** at least one ultrasound transmitter (15, 20, 22, 24) is configured to emit an amplitude from 5 µm to 500 µm, preferably 10 µm to 100 µm in a preferably controllable and/or regulatable manner.

9. The gypsum plasterboard production plant according to any one of the preceding claims, **characterized in that** at least one ultrasound transmitter (15, 20, 22, 24) is configured to output power of at least 700 W in a preferably controllable and/or regulatable manner.

10. The gypsum plasterboard production plant according to any one of the preceding claims, **characterized in that** at least one of the ultrasound transmitters (15, 20, 22, 24), preferably when multiple ultrasound transmitters are present, all of the ultrasound transmitters cooperate with a cooling means which is configured to cool the ultrasound transmitter(s) through a guided cooling air flow.

11. The gypsum plasterboard production plant according to claim 10, **characterized in that** the output power of the cooling means is controllable and/or regulatable in particular as a function of the temperature of the ultrasound transmitter(s) (15, 20, 22, 24).

12. The gypsum plasterboard production plant according to any one of the preceding claims, **characterized in that** at least one top-side ultrasound transmitter (20, 22, 24) is facing at least one bottom-side ultrasound transmitter (15) and/or at least one top-side ultrasound transmitter (22) is located upstream of at least one bottom-side ultrasound transmitter (15) in the running direction and/or
at least one top-side ultrasound transmitter (24) is located downstream of at least one bottom-side ultrasound transmitter (15) in the running direction.

13. The gypsum plasterboard production plant according to any one of claims 1 to 12, **characterized in that** the ultrasound transmitter(s) (15, 20, 22, 24) are arranged at such a position relative to the conveyor belt device (10) that the ultrasound exposure is given preferably for 2 to 8 s, further preferentially about 4 to 5 s prior to the gypsum starting hardening and/or the width of the ultrasound transmitter(s) (15, 20, 22, 24) is dimensioned such that, taking the transport speed of the conveyor belt device into account, the exposure time and the dwelling time of the irradiated surface, respectively, at the respective ultrasound transmitter (15, 20, 22, 24) is at least 0.4 s.

14. A method for producing a gypsum board, in particular according to any one of the preceding claims, comprising the steps of:
- providing a conveyor belt device (10) having a supporting belt (11),
- applying a gypsum layer (16) formed from a top-side casing (27) and a bottom-side casing (28) and a single-layer or multilayer gypsum core (26) arranged therebetween, on the supporting belt (11),
and **characterized by** the following steps of:
- deflecting the supporting belt (11) such that an interspace (14) is formed toward the bottom side (17) of the gypsum layer (16) in at least one position of the supporting belt (11),
- emitting ultrasound within the interspace (14) in the direction of the gypsum layer's (16) bottom side.

15. The method according to claim 14, **characterized in that** the multilayer gypsum core (26) comprises at least two layers (30, 31, 32) differing in at least one chemical and/or physical property, e.g. their density,
wherein preferentially, a first, e.g. foamed layer (30) exhibits a lower density than at least one second, e.g. dense (non-foamed) layer (31, 32) which is disposed between the first layer (30) and the top-side and/or bottom-side casing (27, 28).

## Revendications

1. Installation de fabrication de plaque de plâtre, comprenant
au moins un dispositif à bande transporteuse (10) rotatif destiné à recevoir une nappe de plâtre (16) constituée d'une enveloppe supérieure (27) ainsi que d'une enveloppe inférieure (28) et d'une âme de plâtre (26) monocouche ou multicouche disposée entre ces dernières, et à former et durcir la nappe de plâtre (16),
sachant que le dispositif à bande transporteuse (10) présente une bande de support (11) destinée à soutenir une face inférieure (17) de la nappe de plâtre (16) et sachant qu'un dispositif d'exposition à des ultrasons comportant un ou plusieurs émetteurs d'ultrasons (15, 20, 22, 24) est disposé dans la zone du dispositif à bande transporteuse (10),
**caractérisée en ce que**
au moins un émetteur d'ultrasons inférieur est disposé entre la bande de support (11) et la face inférieure (17) de la nappe de plâtre (16) et la bande de support (11) est guidée dans la zone de cet émetteur d'ultrasons au moyen d'un dispositif de renvoi (13).

2. Installation de fabrication de plaque de plâtre selon la revendication 1, **caractérisée en ce qu'**au moins un émetteur d'ultrasons (20, 22, 24) supérieur est prévu.

3. Installation de fabrication de plaque de plâtre selon l'une des revendications précédentes, **caractérisée en ce qu'**au moins un dispositif de lissage inférieur et/ou au moins un dispositif de lissage supérieur, en particulier une poutre de lissage, qui comprend de préférence au moins un émetteur d'ultrasons (15, 20, 22, 24), est prévu(e).

4. Installation de fabrication de plaque de plâtre selon l'une des revendications précédentes, **caractérisée en ce qu'**au moins un dispositif de réglage de hauteur (29) est prévu pour régler la hauteur d'au moins un émetteur d'ultrasons supérieur et/ou d'au moins un émetteur d'ultrasons inférieur et/ou d'au moins un dispositif de lissage.

5. Installation de fabrication de plaque de plâtre selon l'une des revendications précédentes, **caractérisée en ce qu'**au moins un dispositif de réglage latéral est prévu pour régler la position latérale d'au moins un émetteur d'ultrasons supérieur et/ou d'au moins un émetteur d'ultrasons inférieur (15, 20, 22, 24) et/ou d'au moins un dispositif de lissage (19, 21, 23, 25).

6. Installation de fabrication de plaque de plâtre selon l'une des revendications précédentes, **caractérisée en ce que** la plaque de plâtre (16) repose en fonctionnement sur le dispositif de lissage inférieur (19) et/ou sur l'émetteur d'ultrasons inférieur (15).

7. Installation de fabrication de plaque de plâtre selon l'une des revendications précédentes, **caractérisée en ce qu'**au moins un émetteur d'ultrasons (15, 20, 22, 24) est constitué pour émettre, de préférence de manière commandable et/ou régulable, une fréquence de 10 kHz à 100 kHz, de préférence de 25 kHz à 40 kHz.

8. Installation de fabrication de plaque de plâtre selon l'une des revendications précédentes, **caractérisée en ce qu'**au moins un émetteur d'ultrasons (15, 20, 22, 24) est constitué pour émettre, de préférence de manière commandable et/ou régulable, une amplitude de 5 µm à 500 µm, de préférence de 10 µm à 100 µm.

9. Installation de fabrication de plaque de plâtre selon l'une des revendications précédentes, **caractérisée en ce qu'**au moins un émetteur d'ultrasons (15, 20, 22, 24) est constitué pour délivrer, de préférence de manière commandable et/ou régulable, une puissance d'au moins 700 W.

10. Installation de fabrication de plaque de plâtre selon l'une des revendications précédentes, **caractérisée en ce qu'**au moins l'un des émetteurs d'ultrasons (15, 20, 22, 24) et, en présence de plusieurs émetteurs d'ultrasons, de préférence tous les émetteurs d'ultrasons interagissent avec un dispositif de refroidissement constitué pour refroidir le ou les émetteurs d'ultrasons via un flux d'air de refroidissement dirigé.

11. Installation de fabrication de plaque de plâtre selon la revendication 10, **caractérisée en ce que** la puissance délivrée du dispositif de refroidissement est commandable et/ou régulable, en particulier en fonction de la température du ou des émetteurs d'ultrasons (15, 20, 22, 24).

12. Installation de fabrication de plaque de plâtre selon l'une des revendications précédentes, **caractérisée en ce qu'**au moins un émetteur d'ultrasons supérieur (20, 22, 24) se trouve en face d'au moins un émetteur d'ultrasons inférieur (15) et/ou au moins un émetteur d'ultrasons supérieur (22) est situé devant au moins un émetteur d'ultrasons inférieur (15) en sens de marche et/ou
au moins un émetteur d'ultrasons supérieur (24) est situé derrière au moins un émetteur d'ultrasons inférieur (15) en sens de marche.

13. Installation de fabrication de plaque de plâtre selon l'une des revendications 1 à 12, **caractérisée en ce que** le ou les émetteurs d'ultrasons (15, 20, 22, 24) sont disposés dans une position telle par rapport au dispositif à bande transporteuse (10) que l'incidence d'ultrasons est donnée de préférence 2 à 8 s, de façon plus préférentielle environ 4 à 5 s avant un début de prise du plâtre et/ou la largeur du ou des émetteurs d'ultrasons (15, 20, 22, 24) est dimensionnée de telle sorte que le temps d'incidence ou le temps de séjour de la surface exposée au niveau de l'émetteur d'ultrasons respectif (15, 20, 22, 24) est d'au moins 0,4 s compte tenu de la vitesse de transport du dispositif à bande transporteuse.

14. Procédé de fabrication d'une plaque de plâtre, en particulier selon l'une des revendications précédentes, comportant les étapes :
- mise à disposition d'un dispositif à bande transporteuse (10) comprenant une bande de support (11),
- mise en place, sur la bande de support (11), d'une nappe de plâtre (16) constituée d'une enveloppe supérieure (27) ainsi que d'une enveloppe inférieure (28) et d'une âme de plâtre (26) monocouche ou multicouche disposée entre ces dernières,
et **caractérisé par** les étapes suivantes :
- déviation de la bande de support (11) de telle façon qu'un espace intermédiaire (14) se forme par rapport à la face inférieure (17) de la nappe de plâtre (16) dans au moins une position de la bande de support (11),
- émission d'ultrasons à l'intérieur de l'espace intermédiaire (14) en direction de la face inférieure de la nappe de plâtre (16).

15. Procédé selon la revendication 14, **caractérisé en ce que** l'âme de plâtre (26) multicouche comprend au moins deux couches (30, 31, 32) qui se distinguent par au moins une propriété chimique et/ou physique, en particulier par leur densité,
sachant que de préférence une première couche (30), en particulier moussée, présente une densité plus faible qu'au moins une deuxième couche (31, 32), en particulier dense (non moussée), qui est disposée entre la première couche (30) et l'enveloppe supérieure et/ou inférieure (27, 28).
